(19) **Europäisches Patentamt / European Patent Office / Office européen des brevets**

(11) **EP 2 538 195 A1**

(12) # EUROPEAN PATENT APPLICATION
published in accordance with Art. 153(4) EPC

(43) Date of publication:
**26.12.2012  Bulletin 2012/52**

(51) Int Cl.:
$G01N\ 3/00$ *(2006.01)*    $G01N\ 3/32$ *(2006.01)*

(21) Application number: **11742020.8**

(22) Date of filing: **09.02.2011**

(86) International application number:
**PCT/JP2011/000703**

(87) International publication number:
**WO 2011/099270 (18.08.2011 Gazette 2011/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2010  PCT/JP2010/000891**

(71) Applicant: **Hitachi, Ltd.**
**Chiyoda-ku**
**Tokyo 100-8280 (JP)**

(72) Inventors:
• **HIRANO, Atsuya**
  **Hitachi-shi**
  **Ibaraki 319-1292 (JP)**
• **TOYODA, Yasutaka**
  **Hitachi-shi,**
  **Ibaraki 3191292 (JP)**

(74) Representative: **Erny, Tobias**
**MERH-IP**
**Matias Erny Reichl Hoffmann**
**Paul-Heyse-Strasse 29**
**80336 München (DE)**

(54) **FRACTURE SURFACE ANALYSIS SYSTEM AND METHOD OF FRACTURE SURFACE ANALYSIS**

(57)    Provided is a fracture surface analysis system and method featuring excellent accuracy and reproducibility and designed to estimate fracture mechanics data in a simplified manner.

A surface irregularities waveform that includes fracture surface irregularities forming a steplike shape of a fracture surface is acquired (step S1), and after an overall gradient of the surface irregularities waveform has been corrected and noise eliminated from this waveform (steps S2, S3), positions of uneven portions present on any measuring line are identified from the surface irregularities waveform and the number of uneven portions on the measuring line is counted (step S4), whereby an average distance between the uneven portions on the measuring line is then calculated (step S5), and next the fracture mechanics data relating to a stress intensity factor, crack growth rate, or stress exerted during formation of the fracture surface, is estimated from the average distance between the uneven portions (step S6).

FIG. 1

```
SCAN THE FRACTURE SURFACE
IN ITS X- AND Y-DIRECTIONS        ~S1
ACQUIRE SURFACE IRREGULARITIES
WAVEFORM (x-h, y-h) OF THE FRACTURE

CORRECT AN OVERALL              ~S2
GRADIENT OF THE WAVEFORM

ELIMINATE NOISE                 ~S3

IDENTIFY UNEVEN POSITIONS
ON MEASURING LINES
COUNT THE NUMBER OF UNEVEN      ~S4
POSITIONS ON EACH MEASURING LINE
TOTAL COUNT A OF UNEVEN POSITIONS
ON EACH MEASURING LINE

AVERAGE UNEVEN-SURFACE DISTANCE D   ~S5
= TOTAL LENGTH L OF MEASURING LINES/A

ESTIMATE FRACTURE MECHANICS DATA    ~S6
STRESS INTENSITY FACTOR RANGE
ON THE FRACTURE SURFACE:
CRACK GROWTH RATE:
STRESS RANGE ON THE FRACTURE
SURFACE:

OUTPUT ESTIMATED VALUES         ~S7
ΔK, Δσ, da/dN
```

STRESS INTENSITY FACTOR RANGE ON THE FRACTURE SURFACE: $\Delta K = C_1 \cdot D^{m1}$

CRACK GROWTH RATE: $da/dN = C_2 \cdot \Delta K^{m2}$

STRESS RANGE ON THE FRACTURE SURFACE: $\Delta \sigma = \Delta K \left\{ F \sqrt{(\pi a)} \right\}$

EP 2 538 195 A1

**Description**

Technical Field

The present invention relates to systems for analyzing a fatigue fracture surface of a structure, and to methods of analyzing the same.

Background Art

To investigate the accidental causes of a damaged structure, fracture surface analysis is conducted for fracture surfaces of such a damaged structure and fracture mechanics data that was exerted during the formation of the fracture surfaces, such as stress intensity factors, crack growth rates, and stresses, is estimated during the analysis. During later phases of fracture surface formation due to fatigue damage, distinctive patterns of stripes, streaks, or the like, called "striations", appear and fracture mechanics data can be estimated from spatial intervals of the striped or streaklike patterns. During initial phases of fracture surface formation that have a closer relationship to the sources of the damage, however, striations are usually not observed and a general method for estimating fracture mechanics data in such a case is not yet established.

Techniques for analyzing the fracture surfaces occurring during the initial phases of fatigue fracture surface formation include, for example, a technique that uses spatial frequency analysis of fracture surface irregularities waveforms, and a technique that uses an intergranular facet ratio. The former is described in Patent Document 1, and the latter in Non-Patent Document 2.

Prior Art Literature

Patent Documents

Patent Document 1: Japanese Patent No. 3524728

Non-Patent Documents

Non-Patent Document 1: Journal of the High-Pressure Institute of Japan, Vol. 19, Issue No. 4, pp. 46-49, 1981

Summary of the Invention

Problems to be Solved by the Invention

In the method using the spatial frequency analysis of fracture surface irregularities waveforms, however, as described in Patent Document 1, although damage modes, loads ($\Delta K$), and the like can be estimated, it is unclear how accurately the load can be quantified from a distribution form of frequency spectra. In addition, as described in Non-Patent Document 1, in the method using an intergranular facet ratio of the facets observed during the initial phases of the fracture surface formation, discrimination of the intergranular facets has required a certain degree of skill, thus posing problems in terms of reproducibility not relying upon an operator. Furthermore, in the latter method, a relationship between the facet ratio and the fracture mechanics value $\Delta K$ has significantly varied, which has in turn presented problems in terms of quantification accuracy.

The present invention has been made with the above in mind, and an object of the invention is to provide a fracture surface analysis system and method featuring excellent accuracy and reproducibility and designed to estimate fracture mechanics data in a simplified manner. Means for Solving the Problems

In order to attain the above object, the present invention features estimating, from a distance between surface irregularities of a fatigue fracture surface of a structure, fracture mechanics data that was exerted during formation of the fracture surface.

More specifically, a fracture surface analysis system according to an aspect of the present invention includes: fracture surface information acquisition means for acquiring a surface irregularities waveform by measuring a fracture surface of a structure, the surface irregularities waveform including fracture surface irregularities forming a steplike shape of the fracture surface; a database retaining at least one of a relational expression representing a relationship between the fracture surface irregularities and fracture mechanics data relating to a stress intensity factor, crack growth rate, or stress exerted upon the formation of the fracture surface, and a relational graph of fracture surface irregularities and fracture mechanics data obtained beforehand from a target material forming the fracture surface; and computation means for estimating the fracture mechanics data from the surface irregularities waveform acquired by the fracture surface information acquisition means, as well as from at least one of the relational expression and relational graph saved in the database. The computation means includes: uneven-position identification means for identifying, from the fracture surface irregularities waveform acquired by the fracture surface information acquisition means, uneven positions of fracture surface irregularities present on any measuring line; uneven-position counting means for counting the number of uneven positions identified on the measuring line by the uneven-position identification means; uneven-position distance calculating means for calculating distances between the uneven positions on the measuring line, from the number of uneven positions counted by the uneven-position counting means; and fracture mechanics data estimating means for estimating the fracture mechanics data exerted upon the formation of the fracture surface, from the uneven-position distances calculated by the uneven-position distance calculating means, as well as from at least one of the relational expression and relational graph saved in the database.

A fracture surface analysis method according to another aspect of the present invention includes the steps of: acquiring a surface irregularities waveform by measuring a fracture surface of a structure, the surface irregularities waveform including fracture surface irregularities forming a steplike shape of the fracture surface; identifying, from the acquired surface irregularities waveform, uneven positions of fracture surface irregularities present on any measuring line; counting the number of identified uneven positions present on the measuring line; calculating distances between the uneven positions on the measuring line, from the counted number of uneven positions; and estimating, from the calculated distances between the uneven positions, fracture mechanics data based upon the calculated uneven-position distances and at least one of a relational expression representing a relationship between the uneven-position distances and the fracture mechanics data relating to a stress intensity factor, crack growth rate, or stress exerted upon formation of the fracture surface, and a relational graph of uneven-position distances and fracture mechanics data obtained beforehand from a target material forming the fracture surface.

Effects of the Invention

In accordance with the present invention, fracture mechanics data exerted upon the fracture surface is estimated with high reproducibility, accurately, and in a simplified manner.

Brief Description of the Drawings

Fig. 1 is a flowchart showing a procedure applied in a fracture surface analysis system and method according to a first embodiment of the present invention.

Fig. 2 is a map that shows fracture surface irregularities information in bird's-eye view.

Fig. 3 is a contour map showing a peak noise region.

Fig. 4 is a schematic diagram showing the peak noise region in section.

Fig. 5 is a map that shows fracture surface irregularities information in a contour map format.

Fig. 6 is a sectional view of section A-A in Fig. 3.

Fig. 7 is a diagram showing the identification of uneven portions on measuring lines previously set on the contour map of fracture surfaces.

Fig. 8 is a relational graph representing a relationship between an average distance between uneven portions, D, and a stress intensity factor range $\Delta K$.

Fig. 9 is a relational graph representing a relationship between the stress intensity factor range $\Delta K$ and a crack growth rate da/dN.

Fig. 10 shows an example of a monitor screen displaying an input/output status.

Fig. 11 is a schematic representation of sectional surface irregularities on a measuring line.

Fig. 12 is a diagram illustrating a way to determine reference length $\alpha$ for discriminating an uneven portion.

Fig. 13 is a diagram illustrating a way to determine differential reference height H for discriminating uneven portions.

Fig. 14 is a map that shows uneven portions extracted from a contour map of fracture surfaces.

Fig. 15 is a relational graph representing a relationship between overall differential height $\Delta Z$ in a region to be observed, and the differential reference height H for discriminating uneven portions.

Fig. 16 is a diagram that shows constituent elements of the fracture surface analysis system and method according to the first embodiment of the present invention.

Fig. 17 is a block diagram of an arithmetic processing unit.

Fig. 18 is a flowchart showing a procedure applied in a second embodiment of the present invention.

Fig. 19 is a block diagram of an arithmetic processing unit in the second embodiment of the present invention.

Fig. 20 is a map showing a setting status of regions to be observed in the second embodiment of the present invention.

Modes for Carrying Out the Invention

Hereunder, embodiments of the present invention will be described using the accompanying drawings.

First Embodiment

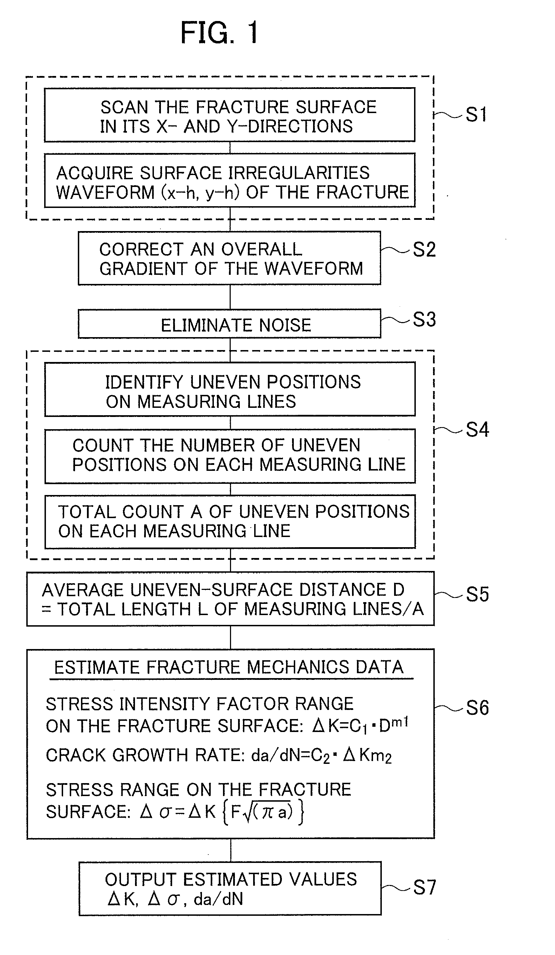

Fig. 1 is a flowchart showing a procedure applied in a fracture surface analysis method according to a first embodiment of the present invention.

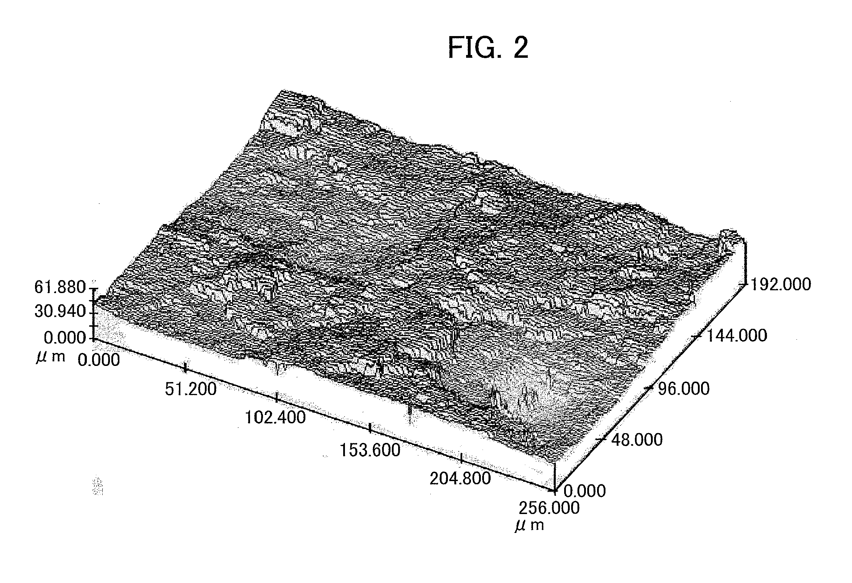

As shown in Fig. 1, in first step S1 of the present embodiment, fatigue fracture surfaces of a damaged structure to be analyzed are each scanned in X- and Y-directions using a laser microscope to acquire surface irregularities information (x-h, y-h) from microscopic regions in the fatigue fracture surface. Means for acquiring the surface irregularities information is not limited to a laser microscope and can be, for example, a three-dimensional electron microscope or an atomic force microscope. Fig. 2 is a map showing, in three-dimensional bird's-eye view, an example of fracture surface irregularities information obtained in step S1. The surface irregularities information exhibits a morphology that much resembles a topology.

If the surface irregularities information has an overall gradient, this overall gradient is corrected to a horizontal one in step S2 as required.

If the surface irregularities information contains high-frequency noise, this high-frequency noise is eliminated in step S3 as required. The elimination of the high-frequency noise uses, for example, a median filter, to maintain an original shape of a surface irregularities waveform.

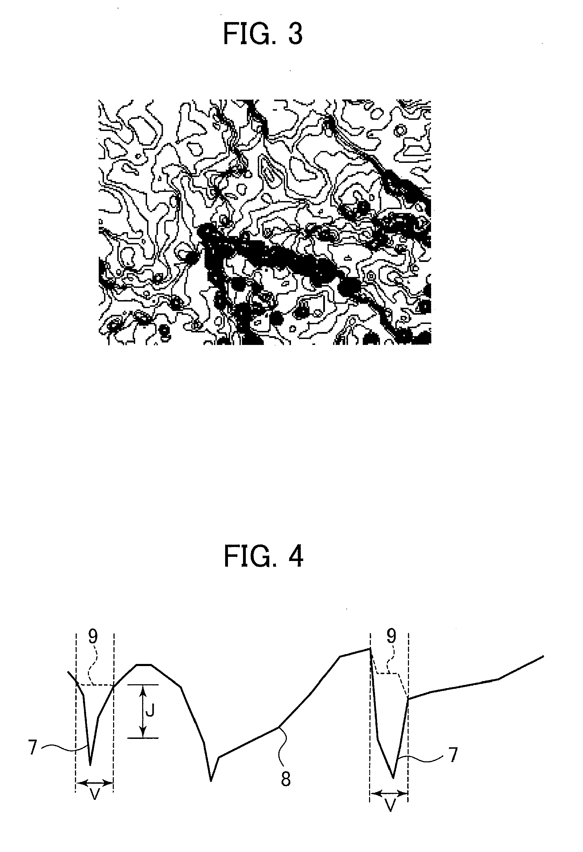

As the case may be, locally protruding surface irregularities are distributed in crater-shaped form as expressed by a contour map of fracture surface irregularities in Fig. 3. The locally protruding surface irregularities are called peak noise 7, which cannot be completely eliminated using the median filter or the like, so the following process is conducted instead.

As shown in Fig. 4, in a range of vertical size V x horizontal size W in the acquired surface irregularities waveform 8, the peak noise 7 can be identified by detecting locations that oscillate back and forth at heights of J and more. In addition, the peak noise 7 can be eliminated by assigning the height of the surface irregularities of the locations which have been identified above as the peak noise 7, to an intermediate height value of locations present in front and at rear of those which oscillate back and forth. These processes are conducted by peak noise elimination means not shown.

To eliminate the peak noise 7, a region containing the peak noise 7 can be excluded from measurement or analysis in and after step S4 described later herein, by visually specifying that peak noise region in the acquired surface irregularities waveform.

Next, procedural control is transferred to step S4, in which uneven positions on measuring lines are then identified from the surface irregularities information which has been corrected during noise elimination or the like in the previous step. The number of uneven portions is also counted in step S4. Setting of the measuring lines will be described later herein.

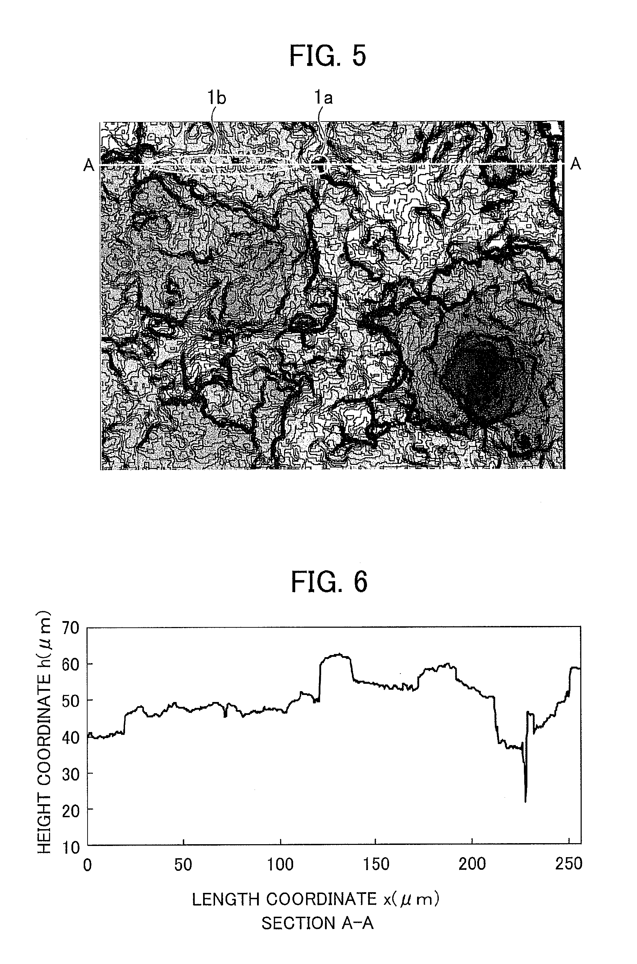

Fig. 5 is a map that shows in a contour map format the surface irregularities information that was obtained in step S1, and Fig. 6 is a sectional view of section A-A in Fig. 5. The contour map of fatigue fracture surfaces, shown in Fig. 5, contains parts congested with contour lines (e.g., a region 1a on line A-A in the figure) and parts sparse in the number of contour lines (e.g., a region 1b on line A-A in the figure). As is evident from Fig. 6, each fatigue fracture surface has a steplike shape in section. The region 1a, a congested part of the contour map, is uneven as at portion S in Fig. 6.

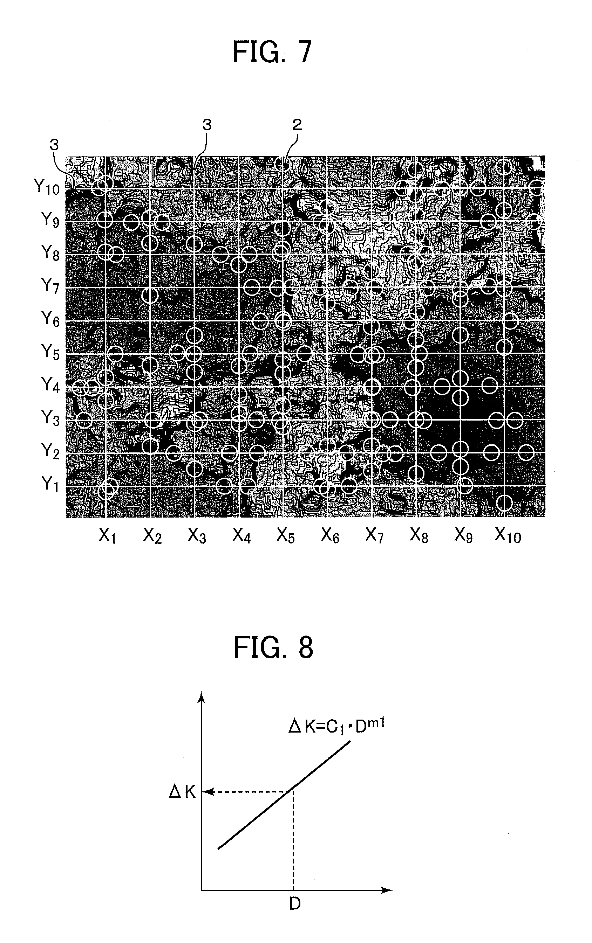

Next, the identification of uneven positions and a method of counting the number of uneven portions are described below using Fig. 7. First in step S4, any number of measuring lines 3 are set both vertically and horizontally on the contour map obtained in the foregoing step, and uneven positions are identified on each of the measuring lines 3 which have been set. The identification of uneven positions may be done by manual means or by means conducting the identification automatically in an arithmetic processing unit. The automatic identification means will be described later herein. The identification of uneven positions on each measuring line 3 is followed by calculation of the number of uneven portions on the measuring line 3. In the illustrated example, 20 measuring lines 3 in total, 10 horizontally and 10 vertically, are set, positions of each uneven portion on the 10 horizontal measuring lines, X1 to X10, and on the 10 vertical measuring lines, Y1 to Y10, are identified, and the number of uneven portions is counted on each measuring line. This results in a total number of uneven portions being obtained as a value A by counting upon each measuring line 3. The identification of the uneven positions and the counting thereof can be carried out more flexibly if a function is provided that allows a user to manually delete specific locations from the identified uneven positions or to add unidentified positions as uneven positions.

After the total number of uneven portions has thus been obtained as the count A, an average distance between the uneven portions, D, is calculated in step S5 from the total uneven-position count A and total length L of the measuring lines 3, using the following expression.

[Numerical expression 1]

Average uneven-portion distance D = L/A          $\cdots$ (1)

In step S6, fracture mechanics data that was exerted upon the material under analysis, during formation of the fracture surfaces, is estimated from the average uneven-portion distance D. In the present embodiment, a stress intensity factor range $\Delta K$, a crack growth rate da/dN, and a stress range $\Delta\sigma$ are estimated as the fracture mechanics data.

Fig. 8 is a relational graph of the average uneven-portion distance D and stress intensity factor range $\Delta K$ obtained beforehand for the material (hereinafter, referred to as the target material), and the relational graph is called from a database relating to the material. To estimate the stress intensity factor range $\Delta K$, the relational graph shown in Fig. 8 can be used to obtain $\Delta K$ from an intersection with the average uneven-portion distance D calculated in step S5. The relational graph is obtained by, for example, during crack growth tests with a Compact Tension (CT) specimen, measuring the average uneven-portion distance D for the fracture surfaces whose stress intensity factor ranges $\Delta K$ are known. The relational graph of the average uneven-portion distance D and the stress intensity factor range $\Delta K$, may not be called from the material database. Instead, $\Delta K$ can be calculated directly from expression (2).

[Numerical expression 2]

Stress intensity factor range $\Delta K = C_1 \cdot D^{m1}$          $\cdots$ (2)

where $C_1$ and $m_1$ are characteristic constants of the material, obtained during crack growth tests.

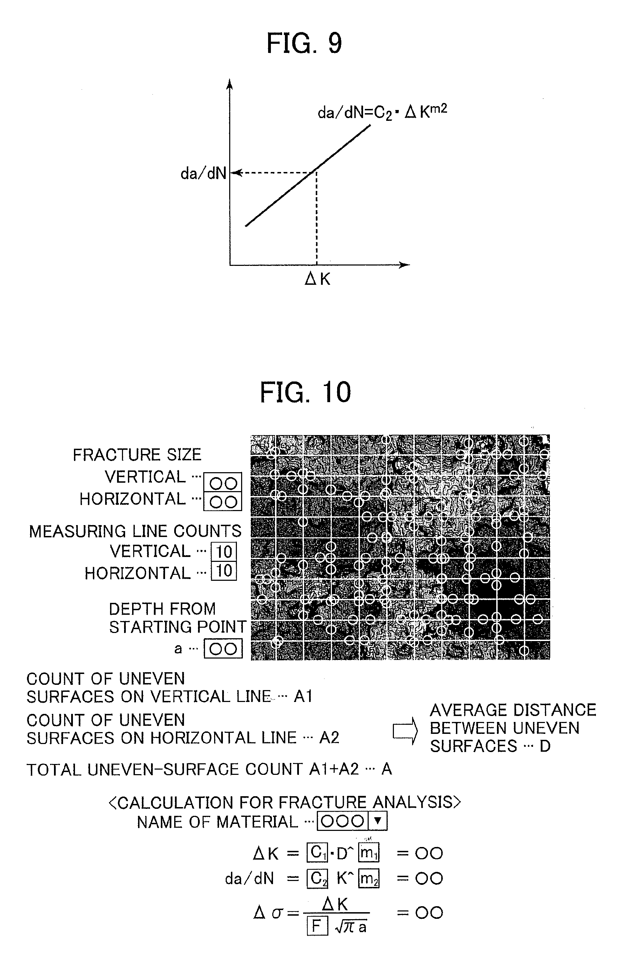

Fig. 9 is a relational graph of the stress intensity factor range $\Delta K$ and crack growth rate da/dN obtained beforehand for the target material, and the relational graph is called from the material database. This relational graph is also obtained by executing crack growth tests with a CT specimen beforehand for the target material. On the basis of the relational graph shown in Fig. 9, the crack growth rate da/dN during the formation of the fracture surfaces is estimated from the stress intensity factor range $\Delta K$ calculated from expression (2) or the relational graph of Fig. 8. The relational graph of Fig. 9 may not be called from the material database. Instead, da/dN can be calculated directly from expression (3).

[Numerical expression 3]

Crack growth rate da/dN = $C_2 \cdot \Delta K^{m2}$          $\cdots$ (3)

where $C_2$ and $m_2$ are characteristic constants of the material, obtained during crack growth tests.

The stress range $\Delta\sigma$ is calculated from expression (4) using the stress intensity factor range $\Delta K$ previously calculated from expression (2) or the relational graph of Fig. 8.

[Numerical expression 4]

Stress range $\Delta\sigma = \dfrac{\Delta K}{F\sqrt{\pi a}}$          $\cdots$ (4)

where F is a form factor determined from a loading form, F being calculable from a handbook, analysis based upon the finite element method, or the like. In addition, "a" is a depth-of-growth from a starting point of cracking.

In this way, the stress intensity factor range $\Delta K$, the crack growth rate da/dN, and the stress range $\Delta\sigma$ are estimated.

The target material may strongly correlate a maximum stress intensity factor $K_{max}$, or a maximum value within a fluctuation range of the stress intensity factor range $\Delta K$, to the average uneven-portion distance D. In such a case, a relational graph representing a relationship between the average uneven-portion distance D previously obtained for the target material, and the maximum stress intensity factor $K_{max}$, that is, a relational graph obtained by replacing $\Delta K$ on a vertical axis of Fig. 8 by $K_{max}$, is called from the material database, and $K_{max}$ can be obtained from an intersection with the average uneven-portion distance D calculated in step S5. This relational graph is obtained by, for example, during crack growth tests with a CT specimen, measuring the average uneven-portion distance D for the fracture surfaces whose maximum stress intensity factors $K_{max}$ are known. The relational graph of the average uneven-portion distance D and the maximum stress intensity factor $K_{max}$, may not be called from the material database. Instead, $K_{max}$ can be calculated directly from expression (5).

[Numerical expression 5]

Maximum stress intensity factor $Kmax = C_3 \cdot D^{m3}$         $\cdots$ (5)

where $C_3$ and $m_3$ are characteristic constants of the material, obtained during crack growth tests.

A maximum value of a stress fluctuation, that is, a maximum stress $\sigma_{max}$ is calculated from the above-obtained maximum stress intensity factor $K_{max}$, using expression (6).

[Numerical expression 6]

Maximum stress  $\sigma_{max} = K_{max} \big/ (F\sqrt{\pi a})$                     $\cdots$ (6)

In general, the crack growth rate da/dN cannot be univocally derived from the maximum stress intensity factor $K_{max}$, so the crack growth rate is not estimable in this case.

The calculated fracture mechanics data is output in step S7. More specifically, as shown in Fig. 10, the estimated stress intensity factor range $\Delta K$, crack growth rate da/dN, and stress range $\Delta\sigma$ are displayed on a monitor screen, and are printed out onto a printer or recorded on a storage medium as required.

As referred to above, the maximum stress intensity factor $K_{max}$ and the maximum stress $\sigma_{max}$ are displayed on the monitor display instead of $\Delta K$ and $\Delta\sigma$, depending upon the target material.

As described above, in accordance with the present embodiment, since the average distance D between the uneven portions of a steplike shape, on the fracture surfaces obtained by means of a laser microscope or the like, is measured using the vertical and horizontal measuring lines drawn on a contour map, fracture mechanics data that was exerted upon the fracture surfaces can be estimated with high reproducibility, accurately, and in a simplified way.

Uneven positions may be automatically identified as follows in step S4.

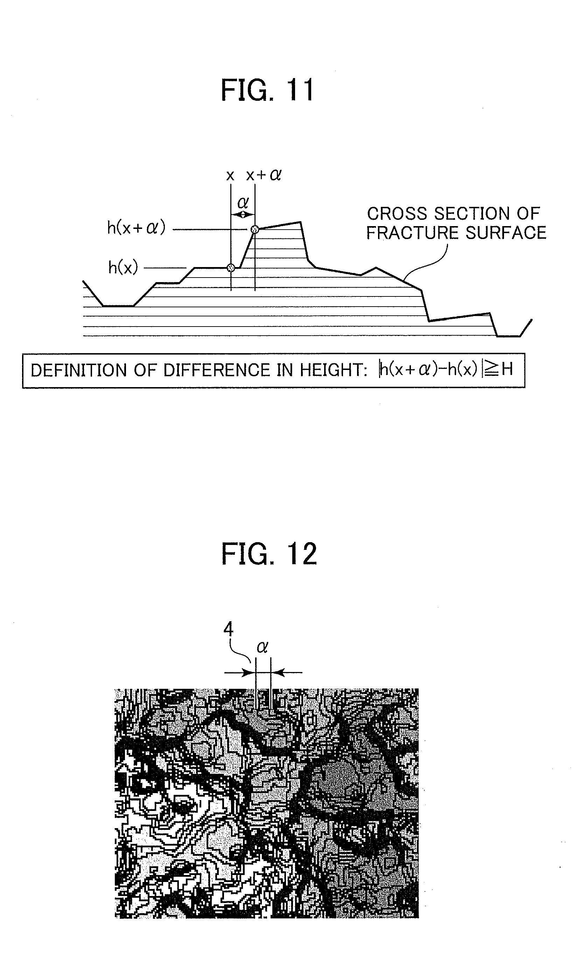

Fig. 11 is a schematic representation of sectional surface irregularities on a measuring line 3. The uneven portions 2 on the contour map of Fig. 7 are recognized as such, provided that respective gradients of inclination are equal to or greater than a fixed value and that differential height between front and rear parts of the uneven position is also equal to or greater than a fixed value. Computer-aided automatic identification of each uneven portion can therefore be used as an automatic identification method. Such identification is possible by using an algorithm designed so that if the differential height between any two points obtained by separating a fixed length of space on the surface irregularities waveform by uneven-portion discrimination reference length $\alpha$ is equal to or greater than uneven-portion discrimination reference height difference H, that portion is determined to be an uneven portion. This condition is represented by expression (7).

[Numerical expression 7]

Uneven-portion discrimination condition: $|h(x+\alpha)-h(x)| \geq H$

$\cdots$ (7)

where "h(x)" is a height coordinate of the surface irregularities waveform and "x" is a length coordinate of the surface irregularities waveform.

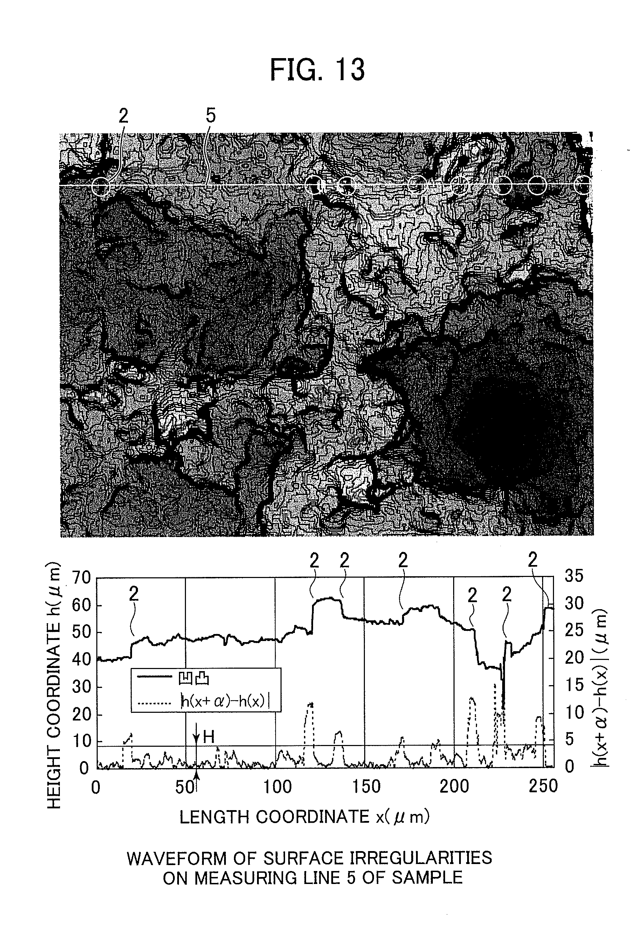

Length that includes width of an uneven region 4 in the contour map, as in Fig. 12, is determined to be the uneven-portion discrimination reference length $\alpha$. In addition, from a $|h(x+\alpha)-h(x)|$ graph (lower half of Fig. 13) of the region on a sample measuring line 5 that was subjected to naked-eye determination of uneven positions from a contour map, height that separates into even portions and uneven portions is determined to be the uneven-portion discrimination reference height difference H.

Furthermore, the uneven-portion discrimination reference length $\alpha$ and the uneven-portion discrimination reference height difference H can also be determined from the respective values obtained for the target material beforehand. These values of the uneven-portion discrimination reference length $\alpha$ and the uneven-portion discrimination reference height difference H can be obtained by the uneven-portion identification of the fracture surfaces obtained during crack growth tests with a CT specimen. The thus-obtained data is stored into the database, and called as required.

In the above-described automatic identification of uneven positions that is based upon the uneven-portion discrimination reference length $\alpha$ and the uneven-portion discrimination reference height difference H, the uneven-position identifying operation in step S4 is speedy and saves labor, so that the uneven portions are discriminated according to fixed standards, which provides advantages of the measured average uneven-portion distance D being made more objective and reproducibility being enhanced as well.

In an alternative way, uneven positions may be automatically identified as follows in step S4 by utilizing image analysis.

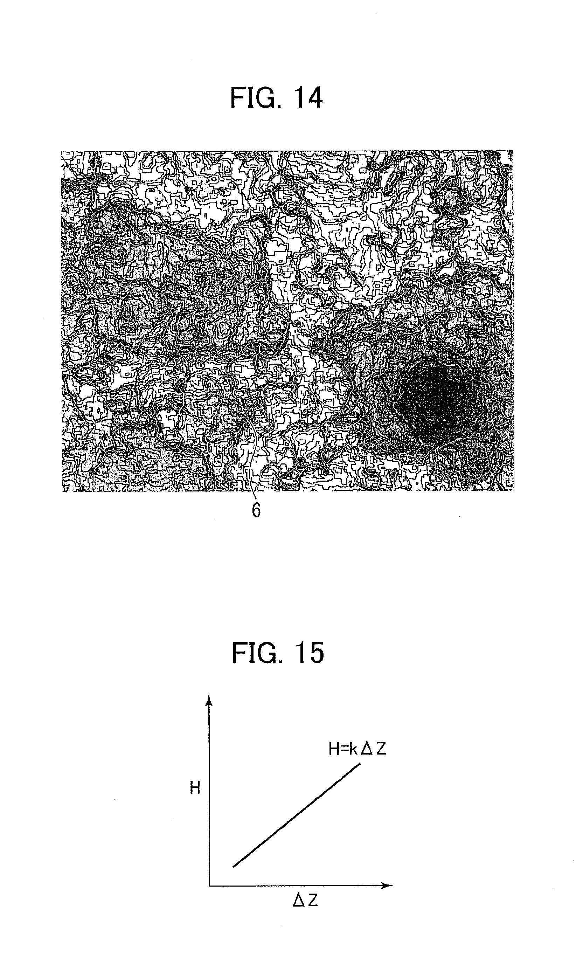

The uneven portion 2 on the contour map of Fig. 7 is congested with contour lines, having a dark color over at least a definite width of space, so uneven portions can be extracted under this condition. Extraction results are shown in Fig. 14. Fig. 14 indicates that an uneven region 6 is extracted and automatically identified.

In the above-described automatic identification of uneven positions that is based upon image processing, the uneven-position identifying operation in step S4 is speedy and saves labor, so that the uneven portions are discriminated according to fixed standards, which provides advantages of the measured average uneven-portion distance D being made more objective and reproducibility being enhanced as well.

In another alternative way, the determination of the uneven-portion discrimination reference height difference H in step S4 may be automatically conducted by utilizing a correlation existing between overall differential height $\Delta Z$ and H in the region to be observed. This automatic determination is described below. Fig. 15 is a relational graph representing the relationship between the overall differential height $\Delta Z$ and uneven-portion discrimination differential reference height H in the region to be observed, and the fact that as shown, $\Delta Z$ and H lie in a linearity relationship is observed by the present inventor. Therefore, H can be determined from measured $\Delta Z$, using expression (8).

[Numerical expression 8]

$$H = k\Delta Z \qquad\qquad \cdots (8)$$

where "k" is a constant, a value of which in the target material may be stored into the material database in advance.

In the above-described automatic identification of uneven positions that is based upon the uneven-portion discrimination differential reference height H, the uneven-position identifying operation in step S4 is speedy and saves labor, so that the uneven portions are discriminated according to fixed standards, which makes the measured average uneven-portion distance D more objective and enhances reproducibility as well.

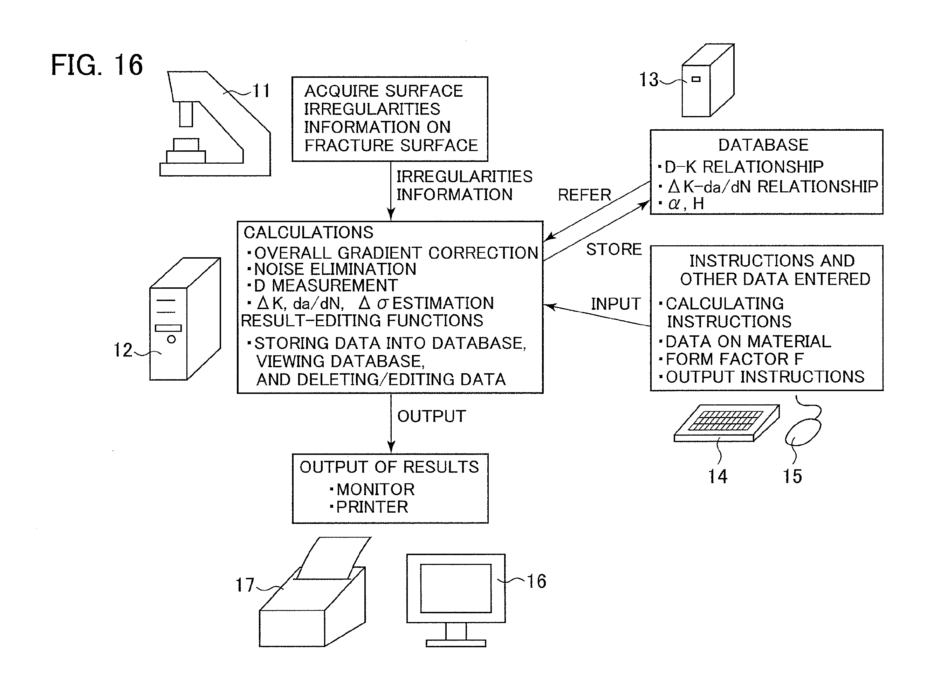

Fig. 16 is a diagram showing a configuration of a fracture surface analysis system according to the present invention.

The fracture surface analysis system according to the present embodiment includes: a laser microscope 11 as the means for acquiring fracture surface irregularities information; a computer 12 with the means for calculating the average uneven-portion distance D and estimating $\Delta K$, da/dN, $\Delta\sigma$, and other fracture mechanics data, in addition to correcting the overall gradient of surface irregularities information and eliminating noise; a database 13 for storage of, for example, the D-$\Delta K$ relational graphs, $\Delta K$-da/dN relational graphs, uneven-portion discrimination reference length $\alpha$, and uneven-portion discrimination differential reference height H obtained beforehand for each kind of material during materials testing; a keyboard 14 and mouse 15 that a user of the system is to use as means for entering various calculating instructions, materials data, a result output instruction, and the like; and a monitor 16 and printer 17 functioning as means to output calculation results, calculating conditions, and other data.

The laser microscope 11 may be replaced by other means that acquires fracture surface irregularities information. For example, a three-dimensional electron microscope or an atomic force microscope is useable as the replacement.

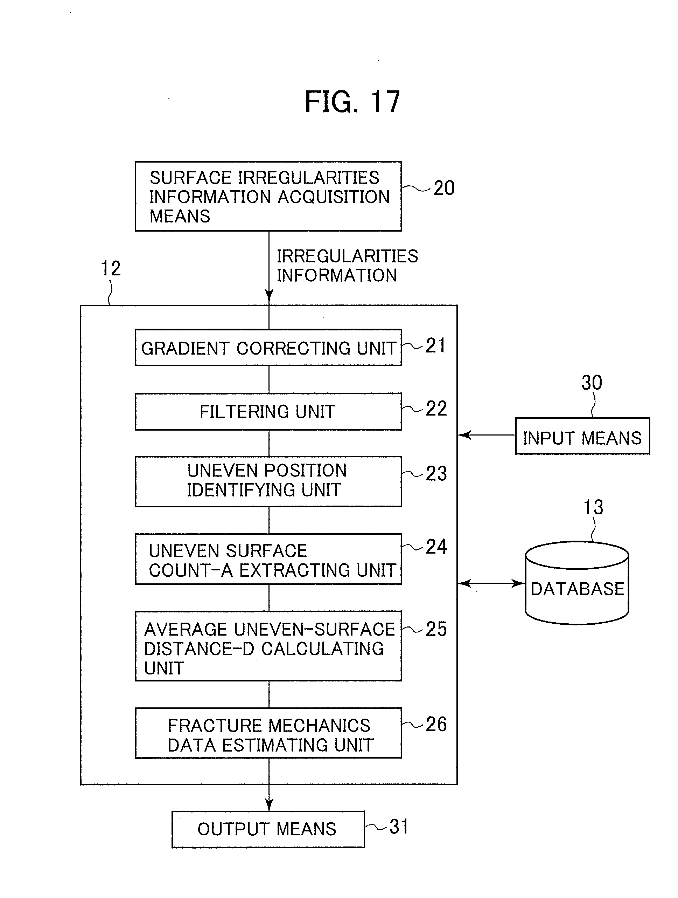

Next, fracture mechanics-data estimating computation by the computer 12 shown in Fig. 16 is described in detail below using Fig. 17. Fig. 17 is a block diagram of fracture mechanics-data estimating arithmetic processing in the computer 12. The computer 12 as the computation means, includes a gradient-correcting unit 21, a filtering unit 22, an uneven-position identifying unit 23, an uneven-portion counting unit 24, an average uneven-position distance calculating unit 25, and a fracture mechanics data estimating unit 26. If surface irregularities information on the fatigue fracture surfaces measured by the surface irregularities information acquisition means 20 such as the laser microscope has an overall gradient, the gradient-correcting unit 21 corrects the gradient to a horizontal gradient. The filtering unit 22 eliminates any peak noise components contained in the surface irregularities information. The uneven-position identifying unit 23 identifies uneven positions present on measuring lines, counts the number of uneven positions on each measuring line, and conducts arithmetic operations upon a total count of uneven positions on all measuring lines. The average uneven-position distance calculating unit 25 calculates the average distance between the uneven positions, from overall length of the measuring lines and the total number of uneven positions on all measuring lines. The fracture mechanics data estimating unit 26 conducts arithmetic operations based upon the database-stored relational graph of the average uneven-position distance D and the stress intensity factor range $\Delta K$, relational graph of the stress intensity factor range $\Delta K$ and the crack growth rate da/dN, relational expression for the stress range $\Delta \alpha$, and the like, and estimates the fracture mechanics data that was exerted upon the fracture surfaces, from the average uneven-position distance calculated by the average uneven-position distance calculating unit 25. Computation results by the fracture mechanics data estimating unit 26 are output to the output means such as the monitor 16 and printer 17. In addition, during the computation of the fracture mechanics data by the computer 12, calculating instructions, materials data, a result output instruction, or other appropriate data is entered from the input means 30 such as the keyboard 14 or mouse 15. The computer 12 also has result-editing functions such as storing estimated fracture mechanics data into the database 13, calling stored fracture mechanics data from the database 13, and deleting the stored fracture mechanics data. These result-editing functions allow the computer 12 to execute, for example, storing the fracture mechanics data into the database 13 and calling or deleting the stored fracture mechanics data therefrom. The result-editing functions can include a function that records in the database 13 an image of the uneven-position identification results by the uneven-position identifying unit 23, or a function that calls the image from the database 13.

The target material may strongly relate the maximum stress intensity factor $K_{max}$ to the average uneven-portion distance D. In such a case, the estimating means of the computer 12 estimates $K_{max}$ and $\alpha_{max}$ from a D-$K_{max}$ relational graph stored within the database 13.

As set forth above, in accordance with the present embodiment, a fracture surface analysis system can be provided that since the average distance between the uneven portions of a steplike shape, on the fracture surfaces obtained by means of the laser microscope or the like, is measured using the vertical and horizontal measuring lines drawn on the contour map, fracture mechanics data that was exerted upon the fracture surfaces is estimated with high reproducibility, accurately, and in a simplified way.

Second Embodiment

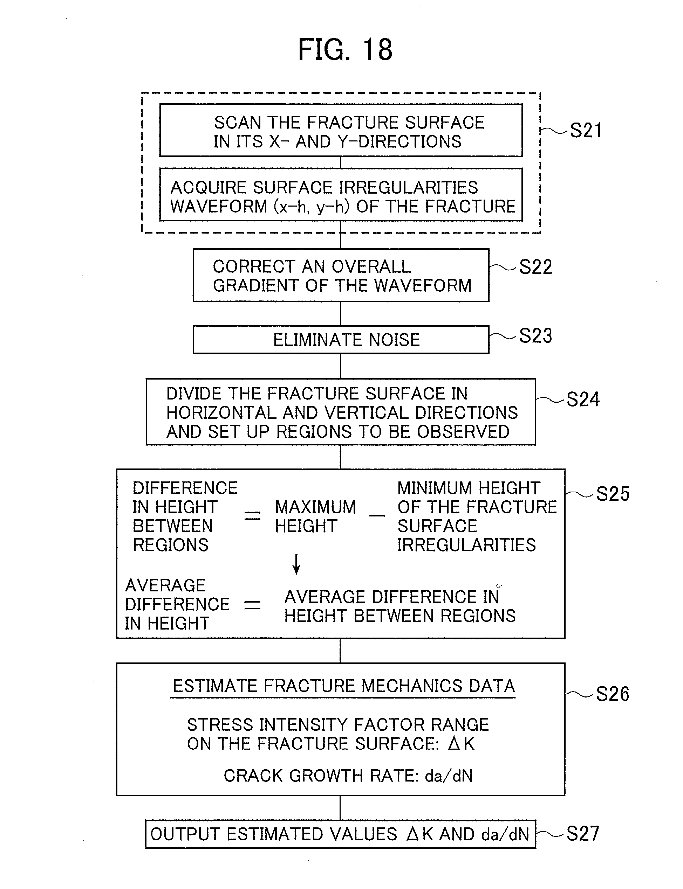

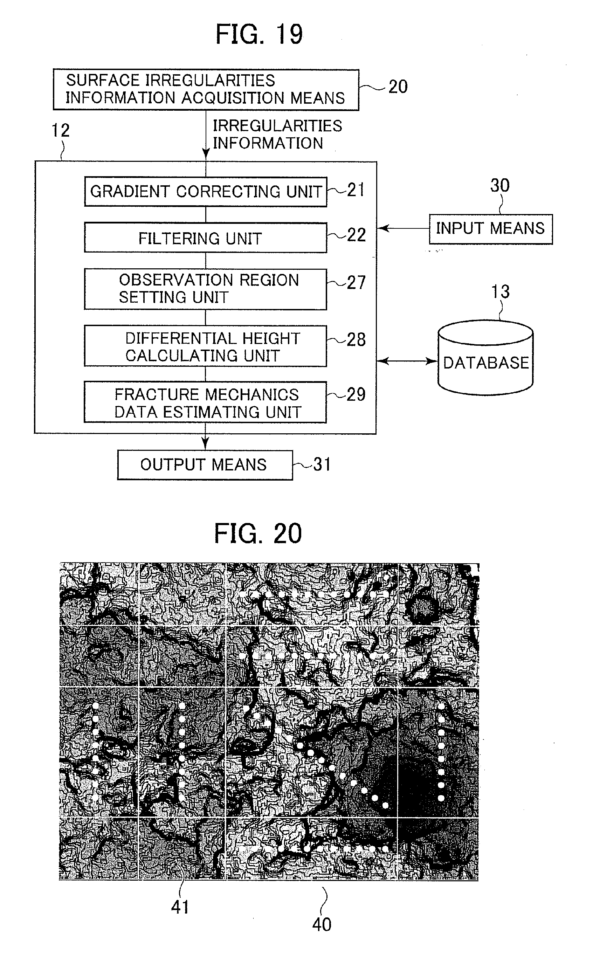

Next, a second embodiment of a fracture surface analysis system and method according to the present invention is described below using Figs. 18 to 20. Fig. 18 is a flowchart relating to the present embodiment, Fig. 19 is a block diagram of an arithmetic processing unit, and Fig. 20 is a map showing a setting status of regions to be observed. The present embodiment has substantially the same hardware configuration as that of the first embodiment shown in Fig. 16, and description of the hardware configuration in the present embodiment is omitted herein.

The present embodiment features estimating fracture mechanics data from differential height of fracture surface irregularities on fatigue fracture surfaces of a structure.

First, a fracture surface analysis sequence in the present embodiment is described below using Fig. 18. In step S21, fatigue fracture surfaces of a damaged structure to be analyzed are each scanned in X- and Y-directions using a laser microscope to acquire surface irregularities information (x-h, y-h) from microscopic regions in the fatigue fracture surface. If the surface irregularities information has an overall gradient, this overall gradient is corrected to a horizontal one in step S22 as required. In addition, if the surface irregularities information contains peak noise, this peak noise is eliminated in step S23 as required. Steps S21 to S23 are substantially the same as steps S1 to S3 in the first embodiment of Fig. 1.

Next, in step S24, as shown in Fig. 20, the fatigue fracture surface 40 that has been acquired as three-dimensional surface irregularities information is divided into an "n" number of parts both vertically and horizontally, and a plurality of regions 41 to be observed are set ("n" is a value specified by an operator, ranging between 1 and 10). In step S25, a value (differential height) obtained by subtracting a minimum value of the fracture surface irregularities in each region 41 to be observed, from a maximum value of the fracture surface irregularities in each region 41, is calculated for each region 41 and then all calculated differences in height are averaged to calculate average differential height.

In step S26, fracture mechanics data that was exerted upon the target material during formation of the fracture surface is estimated from the calculated average differential height. In the present embodiment, a stress intensity factor range $\Delta K$ and a crack growth rate da/dN are estimated as the fracture mechanics data. That is to say, a relational expression or relational graph relating to the fracture surface irregularities (the average differential height) and the fracture mechanics data (the stress intensity factor range $\Delta K$ and the crack growth rate da/dN) obtained from the target material beforehand can be used to calculate the fracture mechanics data. The relational graph of the fracture surface irregularities (the average differential height) and the fracture mechanics data is called from a database, as in the first embodiment. The fracture mechanics data thus obtained is output onto a monitor screen, a storage medium, or the like, in step S27.

Next, the computation for estimating the fracture mechanics data in the present embodiment is described in further detail below using Fig. 19. Fig. 19 is a block diagram of arithmetic processing executed in the computer 12 to estimate the fracture mechanics data. The computer 12 as the computation means, includes a gradient-correcting unit 21, a filtering unit 22, an observation region setting unit 27, a differential height calculating unit 28, and a fracture mechanics data estimating unit 29. The gradient-correcting unit 21 and the filtering unit 22 are substantially the same as those used in the first embodiment, so that description of the units 21, 22 is omitted herein. The observation region setting unit 27 divides the fracture surface acquired as surface irregularities information, into the operator-specified number of parts both vertically and horizontally and sets the plurality of parts as regions to be observed. The differential height calculating unit 28 calculates differences in height between the fracture surface irregularities in each of the regions, and then calculates average differential height by averaging the differences in height. The fracture mechanics data estimating unit 29 conducts arithmetic operations based upon the database-stored relational graph or relational expression of the average differential height and the fracture mechanics data (the stress intensity factor range $\Delta K$ and the crack growth rate da/dN), and estimates the fracture mechanics data that was exerted upon the fracture surface, from the average differential height calculated by the differential height calculating unit 28.

The target material may strongly correlate the maximum stress intensity factor $K_{max}$ to the average differential height. In such a case, the estimating means likewise estimates the fracture mechanics data by replacing the stress intensity factor range $\Delta K$ and the stress range $\Delta\sigma$ by the maximum stress intensity factor $K_{max}$ and the maximum stress $\sigma_{max,}$ respectively.

In the present embodiment, fracture mechanics data that was exerted upon fracture surfaces is also estimated with high reproducibility, accurately, and in a simplified way.

Industrial Applicability

The present invention can be applied to systems and methods for analyzing fracture surfaces of structures.

Description of Reference Numbers

[0075]

> 1a Portion congested with contour lines
> 1b Portion sparse in the number of contour lines
> 2 Uneven portion
> 3 Measuring line
> 4, 6 Uneven regions
> 5 Sample measuring line
> 7 Peak noise
> 8 Surface irregularities waveform
> 9 Intermediate value
> 11 Laser microscope
> 12 Computer
> 13 Database
> 14 Keyboard
> 15 Mouse
> 16 Monitor
> 17 Printer
> 40 Fatigue fracture surface
> 41 Region to be observed
> A Total number of uneven portions
> D Average distance between uneven portions
> H Uneven-portion discrimination reference differential height

L Overall length of measuring lines
α Uneven-portion discrimination reference length

**Claims**

1. A fracture surface analysis system for estimating, from a distance between uneven portions on surface irregularities of a fatigue fracture surface of a structure, fracture mechanics data that was exerted upon formation of the fracture surface.

2. The fracture surface analysis system according to claim 1, further comprising:

   fracture surface information acquisition means (20) for acquiring a surface irregularities waveform by measuring the fracture surface of the structure, the surface irregularities waveform including fracture surface irregularities forming a steplike shape of the fracture surface;
   a database (13) retaining at least one of a relational expression representing a relationship between the fracture surface irregularities and fracture mechanics data relating to a stress intensity factor, crack growth rate, or stress exerted upon the formation of the fracture surface, and a relational graph of fracture surface irregularities and fracture mechanics data obtained beforehand from a target material forming the fracture surface; and
   computation means (12) for estimating the fracture mechanics data from the surface irregularities waveform acquired by the fracture surface information acquisition means, as well as from at least one of the relational expression and relational graph saved in the database;
   wherein the computation means includes:

   uneven-position identification means (23) for identifying, from the surface irregularities waveform acquired by the fracture surface information acquisition means, uneven positions of fracture surface irregularities present on any measuring line;
   uneven-position counting means (24) for counting the number of uneven positions identified on the measuring line by the uneven-position identifying means;
   uneven-position distance calculating means (25) for calculating distances between the uneven positions on the measuring line, from the number of uneven positions counted by the uneven-position counting means; and
   fracture mechanics data estimating means (26) for estimating the fracture mechanics data exerted upon the formation of the fracture surface, from the uneven-position distances calculated by the uneven-position distance calculating means, as well as from at least one of the relational expression and relational graph saved in the database.

3. The fracture surface analysis system according to claim 2, wherein:

   the uneven-position identification means (23) identifies parts of the acquired surface irregularities waveform that are congested with contour lines, as uneven portions.

4. The fracture surface analysis system according to claim 2, wherein:

   the uneven-position identification means (23) determines that if a difference in height between surface irregularities of predetermined length on the measuring line is equal to or greater than a predetermined value, a corresponding portion is determined to be an uneven portion.

5. A fracture surface analysis method for analyzing a fatigue fracture surface of a structure, the method comprising:

   a fracture surface information acquisition step (S1) of acquiring a surface irregularities waveform by measuring the fracture surface of the structure, the surface irregularities waveform including fracture surface irregularities forming a steplike shape of the fracture surface;
   an uneven-position identification step (S4) of identifying, from the acquired surface irregularities waveform, uneven positions of fracture surface irregularities present on any measuring line;
   an uneven-position counting step (S4) of counting the number of identified uneven positions present on the measuring line;
   an uneven-position distance calculating step (S5) of calculating distances between the uneven positions on the measuring line, from the counted number of uneven positions; and
a fracture mechanics data estimating step (S6) of estimating, from the calculated distances between the uneven positions, fracture mechanics data based upon the calculated uneven-position distances and at least one of a relational expression representing a relationship between the uneven-position distances and the fracture mechanics data relating to a stress intensity factor, crack growth rate, or stress exerted upon formation of the fracture surface, and a relational graph of uneven-position distances and fracture mechanics data obtained beforehand from a target material forming the fracture surface.

6. The fracture surface analysis method according to claim 5, wherein:

in the uneven-portion identification step (S4), portions of the acquired surface irregularities waveform that are congested with contour lines are determined to be uneven portions.

7. The fracture surface analysis method according to claim 5, wherein:

in the uneven-position identification step (S4), if a difference in height between surface irregularities of predetermined length on the measuring line is equal to or greater than a predetermined value, a corresponding portion is determined to be an uneven portion.

8. The fracture surface analysis system according to claim 2, wherein:

the computation means (12) further includes peak noise elimination means (22) for eliminating any peak noise components contained in the acquired surface irregularities waveform.

9. The fracture surface analysis system according to claim 8, wherein:

the peak noise elimination means (22) detects a location that oscillates back and forth with a spread of a height change of at least J in a range of vertical size V × horizontal size W, and replaces the height of the surface irregularities of the detected location by an intermediate height value of locations present in front and at rear of the location which oscillates back and forth.

10. The fracture surface analysis system according to claim 8, wherein:

the peak noise elimination means (22) excludes from analysis a peak noise region specified for the acquired surface irregularities waveform.

11. The fracture surface analysis system according to claim 2, further comprising:

a function enabling a user to manually delete/add specific locations from/to the uneven positions identified by the uneven-position identification means (23).

12. The fracture surface analysis system according to claim 2, further comprising:

result-editing means for storing into the database the fracture mechanics data estimated by the fracture mechanics data estimating means (26), calling the stored fracture mechanics data from the database, and deleting the stored fracture mechanics data.

13. The fracture surface analysis system according to claim 12, wherein:

the result-editing means includes functions to record an image of the uneven-position identification results obtained by the uneven-position identification means (23), and to call the image.

14. A fracture surface analysis system for estimating, from differential height of fracture surface irregularities of a given observation region on a fatigue fracture surface of a structure, fracture mechanics data that was exerted upon formation of the fracture surface.

15. The fracture surface analysis system according to claim 14, further comprising:

fracture surface information acquisition means (20) for acquiring a three-dimensional uneven surface shape by measuring the fracture surface of the structure;

a database (13) retaining at least one of a relational expression representing a relationship between fracture surface irregularities obtained beforehand from a target material, and fracture mechanics data relating to a stress intensity factor or crack growth rate exerted upon formation of the fracture surface, and a relational graph of the fracture surface irregularities and the fracture mechanics data; and

computation means (12) for estimating the fracture mechanics data from the three-dimensional uneven surface shape acquired by the fracture surface information acquisition means, as well as from at least one of the relational expression and relational graph saved in the database;

wherein the computation means includes:

differential height calculating means (28) for calculating differential height of the three-dimensional uneven surface shape acquired by the fracture surface information acquisition means, by subtracting a minimum value of the differential height from a maximum value thereof; and

fracture mechanics data estimating means (29) for estimating the fracture mechanics data exerted upon the formation of the fracture surface, from the differential height calculated by the differential height calculating means, as well as from at least one of the relational expression and relational graph saved in the database.

16. A fracture surface analysis method for analyzing a fatigue fracture surface of a structure, the method comprising:

a fracture surface information acquisition step (S21) of acquiring a three-dimensional uneven surface shape by measuring the fracture surface of the structure;

a differential height calculating step (S25) of calculating differential height of the acquired three-dimensional uneven surface shape information by subtracting a minimum value of the differential height from a maximum value thereof; and

a fracture mechanics data estimating step (S26) of estimating fracture mechanics data that was exerted upon formation of the fracture surface, from at least one of a relational expression and relational graph representing a relationship between the calculated differential height, fracture surface irregularities obtained beforehand from a target material, calculated by the differential height calculating means, and the fracture mechanics data relating to a stress intensity factor or crack growth rate exerted upon the formation of the fracture surface.

# FIG. 1

SCAN THE FRACTURE SURFACE IN ITS X- AND Y-DIRECTIONS — S1

ACQUIRE SURFACE IRREGULARITIES WAVEFORM (x–h, y–h) OF THE FRACTURE

CORRECT AN OVERALL GRADIENT OF THE WAVEFORM — S2

ELIMINATE NOISE — S3

IDENTIFY UNEVEN POSITIONS ON MEASURING LINES — S4

COUNT THE NUMBER OF UNEVEN POSITIONS ON EACH MEASURING LINE

TOTAL COUNT A OF UNEVEN POSITIONS ON EACH MEASURING LINE

AVERAGE UNEVEN-SURFACE DISTANCE D = TOTAL LENGTH L OF MEASURING LINES/A — S5

ESTIMATE FRACTURE MECHANICS DATA — S6

STRESS INTENSITY FACTOR RANGE ON THE FRACTURE SURFACE: $\Delta K = C_1 \cdot D^{m1}$

CRACK GROWTH RATE: $da/dN = C_2 \cdot \Delta K^{m2}$

STRESS RANGE ON THE FRACTURE SURFACE: $\Delta \sigma = \Delta K \left\{ F \sqrt{(\pi a)} \right\}$

OUTPUT ESTIMATED VALUES $\Delta K$, $\Delta \sigma$, da/dN — S7

FIG. 2

# FIG. 3

# FIG. 4

# FIG. 5

1b          1a

A                                    A

# FIG. 6

LENGTH COORDINATE x($\mu$m)
SECTION A-A

# FIG. 7

# FIG. 8

$$\Delta K = C_1 \cdot D^{m1}$$

# FIG. 9

$$da/dN = C_2 \cdot \Delta K^{m2}$$

# FIG. 10

FRACTURE SIZE
VERTICAL ··· [OO]
HORIZONTAL ··· [OO]

MEASURING LINE COUNTS
VERTICAL ··· [10]
HORIZONTAL ··· [10]

DEPTH FROM
STARTING POINT
a ··· [OO]

COUNT OF UNEVEN
SURFACES ON VERTICAL LINE ··· A1

COUNT OF UNEVEN
SURFACES ON HORIZONTAL LINE ··· A2

AVERAGE DISTANCE
BETWEEN UNEVEN
SURFACES ··· D

TOTAL UNEVEN-SURFACE COUNT A1+A2 ··· A

<CALCULATION FOR FRACTURE ANALYSIS>
NAME OF MATERIAL ··· [OOO ▼]

$$\Delta K = \boxed{C_1} \cdot D^{\boxed{m_1}} = OO$$

$$da/dN = \boxed{C_2} K^{\boxed{m_2}} = OO$$

$$\Delta \sigma = \frac{\Delta K}{\boxed{F} \sqrt{\pi a}} = OO$$

# FIG. 11

DEFINITION OF DIFFERENCE IN HEIGHT: $|h(x+\alpha)-h(x)| \geqq H$

# FIG. 12

# FIG. 13

WAVEFORM OF SURFACE IRREGULARITIES
ON MEASURING LINE 5 OF SAMPLE

## FIG. 14

6

## FIG. 15

H=k△Z

H

△Z

## FIG. 16

ACQUIRE SURFACE IRREGULARITIES INFORMATION ON FRACTURE SURFACE → (11)

IRREGULARITIES INFORMATION ↓

DATABASE
- D–K RELATIONSHIP
- $\Delta$K–da/dN RELATIONSHIP
- $\alpha$, H

(13)

REFER →

CALCULATIONS
- OVERALL GRADIENT CORRECTION
- NOISE ELIMINATION
- D MEASUREMENT
- $\Delta$K, da/dN, $\Delta\sigma$ ESTIMATION
RESULT-EDITING FUNCTIONS
- STORING DATA INTO DATABASE, VIEWING DATABASE, AND DELETING/EDITING DATA

(12)

STORE

INPUT ←

INSTRUCTIONS AND OTHER DATA ENTERED
- CALCULATING INSTRUCTIONS
- DATA ON MATERIAL
- FORM FACTOR F
- OUTPUT INSTRUCTIONS

(14)   (15)

OUTPUT ↓

OUTPUT OF RESULTS
- MONITOR
- PRINTER

(17)   (16)

EP 2 538 195 A1

# FIG. 17

SURFACE IRREGULARITIES
INFORMATION ACQUISITION ~20
MEANS

IRREGULARITIES
INFORMATION

12

GRADIENT CORRECTING UNIT ~21

FILTERING UNIT ~22

UNEVEN POSITION
IDENTIFYING UNIT ~23

UNEVEN SURFACE
COUNT-A EXTRACTING UNIT ~24

AVERAGE UNEVEN-SURFACE
DISTANCE-D CALCULATING ~25
UNIT

FRACTURE MECHANICS
DATA ESTIMATING UNIT ~26

30

INPUT MEANS

13

DATABASE

OUTPUT MEANS ~31

# FIG. 18

SCAN THE FRACTURE SURFACE
IN ITS X– AND Y–DIRECTIONS ~S21

ACQUIRE SURFACE IRREGULARITIES
WAVEFORM (x–h, y–h) OF THE FRACTURE

CORRECT AN OVERALL
GRADIENT OF THE WAVEFORM ~S22

ELIMINATE NOISE ~S23

DIVIDE THE FRACTURE SURFACE IN
HORIZONTAL AND VERTICAL DIRECTIONS
AND SET UP REGIONS TO BE OBSERVED ~S24

DIFFERENCE IN HEIGHT BETWEEN REGIONS $=$ MAXIMUM HEIGHT $-$ MINIMUM HEIGHT OF THE FRACTURE SURFACE IRREGULARITIES ~S25

$\downarrow$

AVERAGE DIFFERENCE IN HEIGHT $=$ AVERAGE DIFFERENCE IN HEIGHT BETWEEN REGIONS

ESTIMATE FRACTURE MECHANICS DATA ~S26

STRESS INTENSITY FACTOR RANGE
ON THE FRACTURE SURFACE: $\Delta$K

CRACK GROWTH RATE: da/dN

OUTPUT ESTIMATED VALUES $\Delta$K AND da/dN ~S27

# FIG. 19

```
┌────────────────────────────────────┐
│  SURFACE IRREGULARITIES            │──20
│  INFORMATION ACQUISITION MEANS     │
└────────────────────────────────────┘
```

12

IRREGULARITIES INFORMATION

```
┌──────────────────────────────────────────────┐
│  ┌────────────────────────────────────┐       │
│  │  GRADIENT CORRECTING UNIT          │──21    │
│  └────────────────────────────────────┘       │        30
│  ┌────────────────────────────────────┐       │
│  │        FILTERING UNIT              │──22    │◄───  INPUT MEANS
│  └────────────────────────────────────┘       │
│  ┌────────────────────────────────────┐       │
│  │  OBSERVATION REGION                │──27    │        13
│  │  SETTING UNIT                      │       │
│  └────────────────────────────────────┘       │
│  ┌────────────────────────────────────┐       │
│  │  DIFFERENTIAL HEIGHT               │──28    │◄──►  DATABASE
│  │  CALCULATING UNIT                  │       │
│  └────────────────────────────────────┘       │
│  ┌────────────────────────────────────┐       │
│  │  FRACTURE MECHANICS                │──29    │
│  │  DATA ESTIMATING UNIT              │       │
│  └────────────────────────────────────┘       │
└──────────────────────────────────────────────┘
```

```
┌──────────────────────┐
│   OUTPUT MEANS       │──31
└──────────────────────┘
```

# FIG. 20

41

40

| **INTERNATIONAL SEARCH REPORT** | International application No. |
|---|---|
| | PCT/JP2011/000703 |

**A. CLASSIFICATION OF SUBJECT MATTER**
*G01N3/00*(2006.01)i, *G01N3/32*(2006.01)i

According to International Patent Classification (IPC) or to both national classification and IPC

**B. FIELDS SEARCHED**

Minimum documentation searched (classification system followed by classification symbols)
G01N3/00, G01N3/32

Documentation searched other than minimum documentation to the extent that such documents are included in the fields searched
Jitsuyo Shinan Koho            1922–1996   Jitsuyo Shinan Toroku Koho    1996–2011
Kokai Jitsuyo Shinan Koho   1971–2011   Toroku Jitsuyo Shinan Koho    1994–2011

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| X<br>Y | Y.Uchida, et al., Relationship between fatigue striation height and stress ratio, Journal of Materials Science, 1999.05.15, Vol.34 No.10, pp.2411-2419 | 1,14<br>2-13,15,16 |
| Y | JP 2009-085737 A  (Hitachi, Ltd.), 23 April 2009 (23.04.2009), entire text; all drawings (Family: none) | 2-13,15,16 |
| Y | JP 2006-118876 A  (The University of Tokyo), 11 May 2006 (11.05.2006), entire text; all drawings (Family: none) | 2-13,15,16 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 April, 2011 (08.04.11) | 19 April, 2011 (19.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/000703 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-266613 A  (Toshiba Corp.),<br>29 September 2000 (29.09.2000),<br>entire text; all drawings<br>(Family: none) | 1-16 |
| A | JP 7-027635 A  (Mitsubishi Heavy Industries, Ltd.),<br>31 January 1995 (31.01.1995),<br>entire text; all drawings<br>(Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3524728 B

**Non-patent literature cited in the description**

- *Journal of the High-Pressure Institute of Japan,* 1981, vol. 19 (4), 46-49